# EUROPEAN PATENT SPECIFICATION

(11) **EP 2 371 150 B1**
(45) Date of publication and mention of the grant of the patent: **03.01.2018**
(21) Application number: 09832047.6
(22) Date of filing: 29.10.2009
(51) Int. Cl.: H04M 1/725, H04M 1/2745, H04W 4/02

(54) **MOBILE TERMINAL AND METHOD OF MANAGING DATA THEREOF**
MOBILES ENDGERÄT UND VERFAHREN ZUM VERWALTEN VON DATEN DAVON
TERMINAL MOBILE ET PROCÉDÉ CORRESPONDANT DE GESTION DES DONNÉES

(30) Priority: 11.12.2008 KR 20080125981; 11.12.2008 KR 20080125593; 10.07.2009 KR 20090063196
(43) Date of publication of application: 05.10.2011
(73) Proprietor: LG Electronics Inc., Seoul 150-721 (KR)
(72) Inventor: JANG, Minkyoung, Seoul 137-724 (KR); BAEK, Sungmin, Seoul 137-724 (KR)
(74) Representative: Vossius & Partner Patentanwälte Rechtsanwälte mbB
(86) International application number: PCT/KR2009/006276
(87) International publication number: WO 2010/067961

(56) References cited:
- EP-A1- 1 739 991
- KR-B1- 100 680 294
- US-A1- 2008 055 427

## Description

### Technical Field

The present invention relates to a mobile terminal managing location information.

### Background Art

As the functionality of terminals, such as personal computers, notebooks, and mobile phones, is diversified, the terminals have been implemented in the form of multimedia players equipped with complex functions, such as capturing images and video, playing music or video files, game, and reception of broadcast.

Terminals can be divided into mobile terminals and stationary terminals according to whether they are movable. Mobile terminals can also be divided into handheld terminals and vehicle mount terminals according to whether they can be directly carried on by a user.

In order to support and increase the functionality of the terminals, improving structural or software portions or both of the terminals may be taken into consideration.

US 2008/00554227 A1 disclosed a mobile terminal according to the preamble of claim 1.

### Disclosure of Invention

### Technical Problem

In recent years, a variety of terminals, including mobile terminals, provide complex and various functionalities. For example, the terminals can provide a function of transmitting and receiving messages, such as SMS, MMS, or e-mail. A variety of terminals, including the existing mobile terminals, simply provide a function of transmitting and receiving messages and a function of managing transmitted and received messages, but do not provide a wide functionality with users.

Further, a variety of terminals, including mobile terminals, generally provide a location based service (LBS) function because they provide complex and various functions. Meanwhile, position information acquired by the LBS function is applied to various applications. Accordingly, there is a need for a user interface for storing the position information in the memory of a mobile terminal.

Moreover, there is a problem in that the frequency of using an application function using position information is low because a function of efficiently storing and retrieving the acquired position information is inadequate.

### Solution to Problem

According to the present invention, there is provided a mobile terminal according to claim 1.

### Advantageous Effects of Invention

An aspect of the present invention is to provide a mobile terminal managing location information, which address the limitations and disadvantages associated with the related art.

Another aspect of the present invention is to provide a mobile terminal which is, user-friendly in manipulating and using location information.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to an embodiment of the present invention;
FIG. 2 is a front perspective view of a handheld terminal pertinent to an embodiment of the present invention;
FIG. 3 is a rear perspective view of the handheld terminal pertinent to an embodiment of the present invention;
FIGs. 4 and 5 are front views of the handheld terminal for describing an example of an operating state of the handheld terminal according to an embodiment of the present invention;
FIG. 6 is a conceptual view illustrating the proximity depth of a proximity sensor according to an embodiment of the present invention;
FIG. 7 is a block diagram showing the construction of a CDMA wireless communication system communicating with the mobile terminal shown in FIG. 1;
FIG. 8 illustrates an example of a wireless LAN system that communicates with the mobile terminal shown in FIG. 1;
FIG. 9 is a flowchart illustrating a method of managing messages of a mobile terminal according to a first embodiment of the present invention;
FIGs. 10 and 11 are diagrams showing examples of a screen displaying received messages according to the present invention;
FIGs. 12 and 13 are diagrams showing examples of a user interface for user inquiry according to the present invention;
FIG. 14 is a flowchart illustrating a method for managing messages of a mobile terminal according to a second embodiment of the present invention;
FIGs. 15 and 19 are diagrams showing examples of a screen for writing a reply to a received message according to the second embodiment of the present invention;
FIG. 17 is a diagram showing an example of a screen where the steps of S220 and S230 of FIG. 14 are performed;
FIG. 18 is a flowchart illustrating a method for managing messages of a mobile terminal according to a third embodiment of the present invention;
FIG. 19 is a diagram showing a screen changed to a screen for writing a reply according to a third embodiment of the present invention;
FIG. 20 is a diagram showing an example where the steps of S310 and S320 of FIG. 18 are performed;
FIG. 21 is a diagram showing an example where the step S340 of FIG. 18 is carried out;
FIG. 22 is a flowchart illustrating a method for managing messages of a mobile terminal according to a fourth embodiment of the present invention;
FIGs. 23 to 25 are diagrams showing examples of a screen where the steps of S400 and S410 of FIG. 22 are performed;
FIGs. 26 to 28 are diagrams showing examples of a screen where the steps of S420 and S430 of FIG. 22 are performed;
FIG. 29 is a flowchart illustrating a method for managing a phonebook of a mobile terminal;
FIG. 30 is a flowchart illustrating a method for managing a phonebook of a mobile terminal according to an input mode at a particular step of FIG. 29;
FIGs. 31 to 41 are diagrams showing examples of a screen where the method for managing a phonebook of a mobile terminal is implemented.

### Mode for the Invention

Reference will now be made in detail to the preferred embodiments of the present invention, examples of which are illustrated in the accompanying drawings.

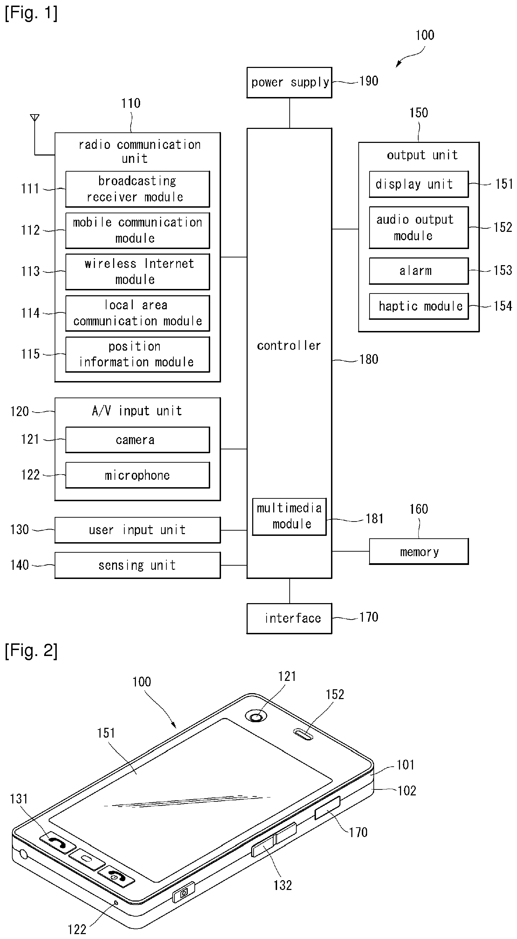

FIG. 1 is a block diagram of a mobile terminal 100 according to an embodiment of the present invention. As shown, the mobile terminal 100 includes a radio communication unit 110, an audio/video (A/V) input unit 120, a user input unit 130, a sensing unit 140, an output unit 150, a memory 160, an interface 170, a controller 180, and a power supply 190. All components of the mobile terminal 100 are operatively coupled and configured.

In addition, the radio communication unit 110 includes at least one module that enables radio communication between the mobile terminal 100 and a radio communication system or between the mobile terminal 100 and a network in which the mobile terminal 100 is located. For example, the radio communication unit 110 includes a broadcasting receiving module (or broadcast receiver module) 111, a mobile communication module 112, a wireless Internet module 113, a local area communication module 114 and a position information module 115.

The broadcasting receiving module 111 receives broadcasting signals and/or broadcasting related information from an external broadcasting management server or other suitable device through a broadcasting channel. Also, the broadcasting channel can include a satellite channel and a terrestrial channel, and the broadcasting management server can be a server that generates and transmits broadcasting signals and/or broadcasting related information or a server that receives previously created broadcasting signals and/or broadcasting related information and transmits the broadcasting signals and/or broadcasting related information to a terminal.

Further, the broadcasting signals can include not only TV broadcasting signals, radio broadcasting signals and data broadcasting signals, but also signals in the form of combination of a TV broadcasting signal and a radio broadcasting signal. In addition, the broadcasting related information can be information on a broadcasting channel, a broadcasting program or a broadcasting service provider, and can be provided even through a mobile communication network. In the latter case, the broadcasting related information can be received by the mobile communication module 112.

Also, the broadcasting related information can exist in various forms. For example, the broadcasting related information can exist in the form of an electronic program guide (EPG) of the digital multimedia broadcasting (DMB) system or in the form of an electronic service guide (ESG) of the digital video broadcast-handheld (DVB-H) system.

In addition, the broadcasting receiving module 111 receives broadcasting signals using various broadcasting systems. Particularly, the broadcasting receiving module 111 can receive digital broadcasting signals using digital broadcasting systems such as the digital multimedia broadcasting-terrestrial (DMB-T) system, the digital multimedia broadcasting-satellite (DMB-S) system, the media forward link only (MediaFLO) system, the DVB-H and integrated services digital broadcast-terrestrial (ISDB-T) systems, etc. The broadcasting receiving module 111 can also be constructed to be suited to broadcasting systems providing broadcasting signals other than the above-described digital broadcasting systems.

Further, the broadcasting signals and/or broadcasting related information received through the broadcasting receiving module 111 can be stored in the memory 160. The mobile communication module 112 transmits/receives a radio signal to/from at least one of a base station, an external terminal and a server on a mobile communication network. The radio signal can include a voice call signal, a video telephony call signal or data in various forms according to transmission and reception of text/multimedia messages.

In addition, the wireless Internet module 113 corresponds to a module for wireless Internet access and can be included in the mobile terminal 100 or externally attached to the mobile terminal 100. A wireless LAN (WLAN) (Wi-Fi), wireless broadband (Wibro), world interoperability for microwave access (Wimax), high speed downlink packet access (HSDPA) and so on can be used as a wireless Internet technique.

Also, the local area communication module 114 corresponds to a module for local area communication. The local area communication includes a short range communication. For example, Bluetooth, radio frequency identification (RFID), infrared data association (IrDA), ultra wideband (UWB) and ZigBee can be used as a local area communication technique, which can be performed by the local communication module 114.

The position information module 115 is used for identifying and/or obtaining the location of a mobile device. The position information module 115 can obtain location information either through Global Navigation Satellite System (GNSS), cell identification (cell-ID), or wireless LAN-based location sensing. In what follows, each method by which the position information module 115 acquires location information is described.

First, the position information module 115 can acquire location information through GNSS. GNSS is a generic term for satellite navigation systems that provide reference signals by which particular types of radio navigation receivers can determine their positions on or near the earth's surface. The GNSS comprises the U.S. system GPS (Global Positioning System), the European system Galileo, the Russian system GLONASS (Global Orbiting Navigational Satellite System), the Chinese system COMPASS, and the Japanese system QZSS (Quasi-Zenith Satellite System).

In a typical example of GNSS, the position information module 115 can be a GPS module. The GPS module measures distances between a particular position and more than three satellites, extracts information about the time at which the distances are measured, and applies triangulation to the measured distances, thereby obtaining three dimensional position information expressed by latitude, longitude, and altitude. Another popular GPS triangulation method utilizes three satellites to obtain position and time information and incorporates signals from a fourth satellite to compensate for error of the position and time information. The GPS module continuously calculates current position in real time and estimates velocity information based on the calculated position.

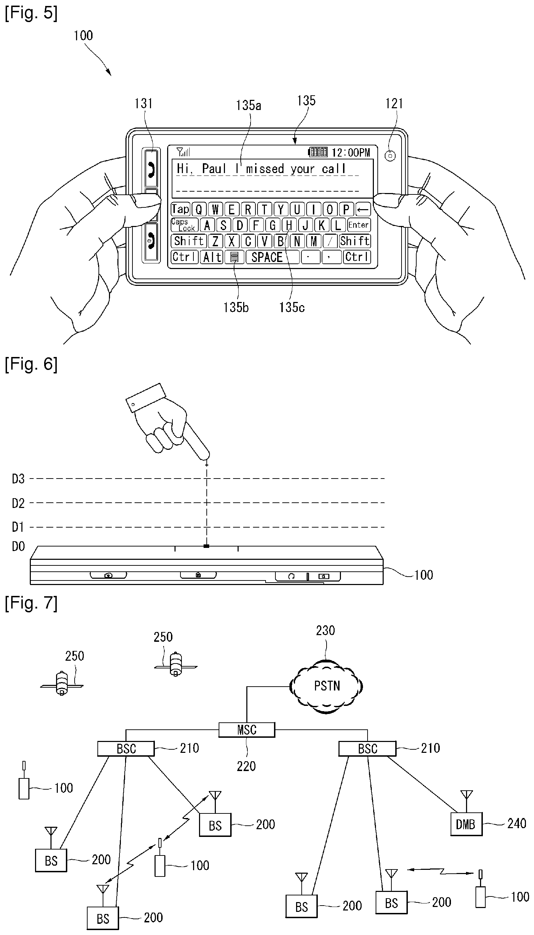

Second, the position information module 115 can acquire location information through cell identification (cell ID) location technique. The cell ID location technique employs several radio base stations 200 of a wireless communications system (for example, refer to FIG. 7). The wireless communications system refers to a mobile communications system based on CDMA, GSM, or WCDMA.

In the cell ID location technique, position tracking is based on ID information (for example, base station ID) of more than one base station 200 that covers the current location of the mobile terminal 100 and signal strength information received from each base station. The cell ID location technique may incorporate one or two base stations or triangulation based on three base stations for more accurate localization. In other words, according to the number of base stations available, a different localization algorithm can be applied for the cell ID location technique, achieving higher accuracy as the number of base stations increases.

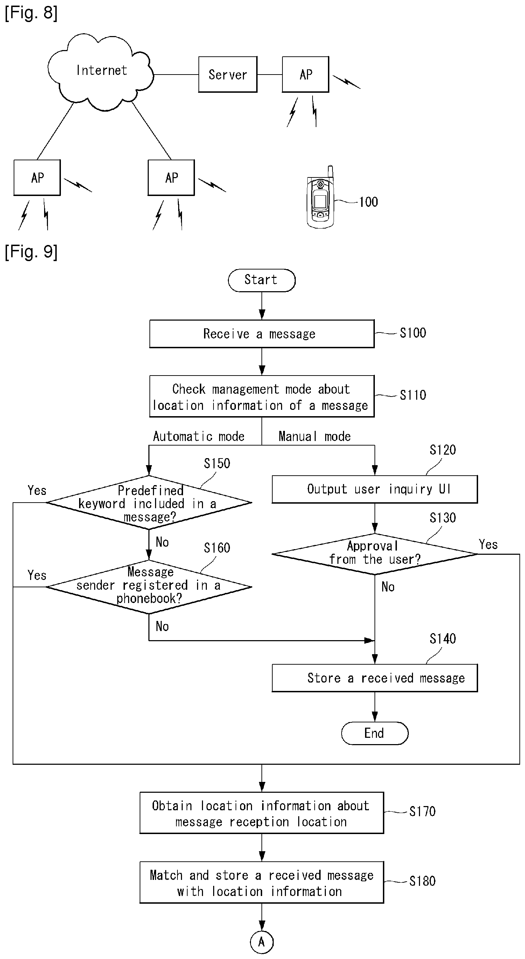

Third, the position information module 115 can acquire location information through a wireless LAN based location sensing technique. FIG. 8 illustrates an example of a wireless LAN system that communicates with the mobile terminal illustrated in FIG. 1. A wireless LAN system generally incorporates a number of access points (APs) corresponding to the terminal points of a backbone network. The wireless LAN system can recognize the information about the position of each access point. Also, the location information of each access point can be managed either by particular areas or by the respective access points.

The mobile terminal 100 can carry out wireless communication with the access point through wireless LAN access. Therefore, the mobile terminal 100, through wireless communication with the access point, can acquire the information about the current location of the mobile terminal 100.

Referring to FIG. 1, the A/V input unit 120 is used to input an audio signal or a video signal and includes a camera 121 and a microphone 122. The camera 121 processes image frames of still images or moving images obtained by an image sensor in a video telephony mode or a photographing mode. Further, the processed image frames can be displayed on a display unit 151.

Also, the image frames processed by the camera 121 can be stored in the memory 160 (or storage unit) or transmitted to an external device through the radio communication unit 110. The mobile terminal 100 can also include at least two cameras. The microphone 122 receives an external audio signal in a call mode, a recording mode or a speed recognition mode and processes the received audio signal into electric audio data.

The audio data can then be converted into a form that can be transmitted to a mobile communication base station through the mobile communication module 112 and output in the call mode. Further, the microphone 122 can employ various noise removal algorithms for removing noise generated when the external audio signal is received.

In addition, the user input unit 130 receives input data for controlling the operation of the terminal from a user. The user input unit 130 can include a keypad, a dome switch, a touch pad (constant voltage/capacitance), jog wheel, jog switch and so on. The user may also input commands and data via voice through the user input unit 130.

Also, the sensing unit 140 senses the current state of the mobile terminal 100, such as an open/close state of the mobile terminal 100, the position of the mobile terminal 100, whether a user touches the mobile terminal 100, the direction of the mobile terminal 100 and the acceleration/deceleration of the mobile terminal 100, and generates a sensing signal for controlling the operation of the mobile terminal 100.

For example, the sensing unit 140 can sense whether a slide phone is opened or closed when the mobile terminal 100 is the slide phone. Furthermore, the sensing unit 140 can sense whether the power supply 190 supplies power and whether the interface 170 is connected to an external device. The sensing unit 140 can also include a proximity sensor.

In addition, the output unit 150 generates visual, auditory or tactile output and can include the display unit 151, an audio output module 152, an alarm 153 and a haptic module 154. Further, the display unit 151 displays information processed by the mobile terminal 100. For example, the display unit 151 displays a user interface (UI) or graphic user interface (GUI) related to a telephone call when the mobile terminal is in the call mode. The display unit 151 also displays a captured or/and received image, UI or GUI when the mobile terminal 100 is in the video telephony mode or the photographing mode.

In addition, the display unit 151 can include at least one of a liquid crystal display, a thin film transistor liquid crystal display, an organic light-emitting diode display, a flexible display and a three-dimensional display. Further, some of these displays can be of a transparent type or a light transmission type. That is, the display unit 151 can include a transparent display.

In more detail, the transparent display includes a transparent liquid crystal display. Further, the rear structure of the display unit 151 can also be of the light transmission type. Accordingly, a user can see an object located behind the body of the mobile terminal 100 through the transparent area of the body of the mobile terminal 100, which is occupied by the display unit 151.

The mobile terminal 100 can also include at least two display units 151. For example, the mobile terminal 100 can include a plurality of displays that are arranged on a single face at a predetermined distance or integrated displays. The plurality of displays can also be arranged on different sides.

In addition, when the display unit 151 and a sensor sensing touch (referred to as a touch sensor hereinafter) form a layered structure, which is referred to as a touch screen hereinafter, the display unit 151 can be used as an input device in addition to an output device. The touch sensor can be in the form of a touch film, a touch sheet and a touch pad, for example.

Further, the touch sensor can be constructed to convert a variation in pressure applied to a specific portion of the display unit 151 or a variation in capacitance generated at a specific portion of the display unit 151 into an electric input signal. The touch sensor can also be constructed to sense pressure of touch as well as the position and area of the touch.

Also, when the user applies a touch input to the touch sensor, a signal corresponding to the touch input is transmitted to a touch controller, which may be part of the controller 180 or the output unit 150. The touch controller then processes the signal and transmits data corresponding to the processed signal to the controller 180. Accordingly, the controller 180 can detect a touched portion of the display unit 151.

Referring to FIG. 1, the proximity sensor of the sensing unit 140 can be located in an internal region of the mobile terminal, surrounded by the touch screen, or near the touch screen. The proximity sensor senses an object approaching a predetermined sensing face or an object located near the proximity sensor using an electromagnetic force or infrared rays without having mechanical contact. Further, the proximity sensor has lifetime longer than that of a contact sensor and thus has a wide application in the mobile terminal 100.

In addition, the proximity sensor can include a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc. Further, a capacitive touch screen is constructed such that proximity of a pointer is detected through a variation in an electric field according to the proximity of the pointer. In this instance, the touch screen (touch sensor) can be classified as a proximity sensor.

For convenience of explanation, the action of the pointer approaching the touch screen without actually touching the touch screen is referred to as "proximity touch" and an action of bringing the pointer into contact with the touch screen is referred to as "contact touch" in the following description. In addition, the proximity touch point of the pointer on the touch screen corresponds to a point of the touch screen to which the pointer touches the touch screen.

Further, the proximity sensor senses the proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can then be displayed on the touch screen.

Also, the audio output module 152 can output audio data received from the radio communication unit 110 or stored in the memory 160 in a call signal receiving mode, a telephone call mode or a recording mode, a speech recognition mode and a broadcasting receiving mode. Further, the audio output module 152 outputs audio signals related to functions (for example, a call signal incoming tone, a message incoming tone, etc.) performed in the mobile terminal 100. The audio output module 152 can include a receiver, a speaker, a buzzer, etc.

In addition, the alarm 153 outputs a signal for indicating the generation of an event of the mobile terminal 100. For example, alarms can be generated when receiving a call signal, receiving a message, inputting a key signal, inputting touch, etc. The alarm 153 can also output signals in forms different from video signals or audio signals, for example, a signal for indicating generation of an event through vibration. The video signals or the audio signals from the alarm 153 can be also output through the display unit 151 or the audio output module 152.

Also, the haptic module 154 generates various haptic effects that the user can feel. One representative example of the haptic effects is vibration. The intensity and pattern of vibration generated by the haptic module 154 can also be controlled. For example, different vibrations can be combined and output or can be sequentially output.

Further, the haptic module 154 can generate a variety of haptic effects including an effect of stimulus according to arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 can also not only transmit haptic effects through direct contact but also allow the user to feel haptic effects through a kinesthetic sense of the user's fingers or arms. The mobile terminal 100 can also include multiple haptic modules 154.

In addition, the memory 160 (or storage unit) can store program(s) for the operation of the controller 180 and temporarily store input/output data (for example, phone book, messages, still images, moving images, etc.). The memory 160 can also store data about vibrations and sounds in various patterns, which are output from when a touch input is applied to the touch screen.

Further, the memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk, an optical disk, a memory stick etc. The mobile terminal 100 can also operate in relation to a web storage performing the storing function of the memory 160 on the Internet or other network.

The interface 170 serves as a path to external devices connected to the mobile terminal 100. External devices can be other mobile terminal, stationary terminals, auxiliary devices, etc. Further, the interface 170 receives data from the external devices or power and transmits the data or power to the internal components of the mobile terminal 100 or transmits data of the mobile terminal 100 to the external devices. Also, the interface 170 can include a wired/wireless headset port, an external charger port, a wired/wireless data port, a memory card port, a port for connecting a device having a user identification module, an audio I/O port, a video I/O port, an earphone port, etc., for example.

In addition, the interface 170 can also interface with a user identification module that is a chip that stores information for authenticating the authority to use the mobile terminal 100. For example, the user identification module can be a user identify module (UIM), a subscriber identify module (SIM) and a universal subscriber identify module (USIM). An identification device including the user identification module can also be manufactured in the form of a smart card. Accordingly, the identification device can be connected to the mobile terminal 100 through a port of the interface 170.

The interface 170 can also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle can be used as signals for confirming whether the mobile terminal is correctly set in the cradle.

In addition, the controller 180 controls the overall operations of the mobile terminal. For example, the controller 180 performs control and processing for voice communication, data communication and video telephony. As shown in FIG. 1, the controller 180 also includes a multimedia module 181 for playing multimedia. Also, the multimedia module 181 can be included in the controller 180 as shown in FIG. 1 or can be separated from the controller 180.

Further, the controller 180 can perform a pattern recognition process capable of recognizing handwriting input or picture-drawing input applied to the touch screen as characters or images. In addition, the power supply 190 receives external power and internal power and provides power required for the operations of the components of the mobile terminal under the control of the controller 180.

Next, FIG. 2 is a front perspective view of a mobile terminal or a handheld terminal 100 according to an embodiment of the present invention. In this example, the handheld terminal 100 is a bar type terminal body. However, the present invention is not limited to a bar type terminal and can be applied to terminals of various types including, e.g., slide type, folder type, swing type and swivel type terminals.

In addition, the terminal body includes a case (a casing, a housing, a cover, etc.) forming the exterior of the terminal 100. In the present embodiment, the case is divided into a front case 101 and a rear case 102. Further, various electronic components are arranged in the space formed between the front case 101 and the rear case 102. At least one middle case can also be additionally arranged between the front case 101 and the rear case 102. Also, the cases can be formed of plastics through injection molding or made of a metal material such as stainless steel (STS) or titanium (Ti).

As shown in FIG. 2, the display unit 151, the audio output unit 152, the camera 121, user input units 131 and 132, the microphone 122 and the interface 170 are arranged in the terminal body, specifically, in the front case 101. In addition, the display unit 151 occupies most of the main face of the front case 101.

Further, the audio output unit 152 and the camera 121 are arranged in a region in proximity to one of both ends of the display unit 151. Also, the user input unit 131 and the microphone 122 are located in a region in proximity to the other end of the display unit 151. Also include is another user input unit 132, which is arranged with the interface 170 on the sides of the front case 101 and the rear case 102.

Thus, in this embodiment, the user input unit 130 includes multiple operating units (user input units) 131 and 132 that are operated to receive commands for controlling the operation of the handheld terminal 100. Further, the operating units 131 and 132 can be referred to as manipulating portions and employ any tactile manner in which a user operates the operating units 131 and 132 while producing a tactile feeling.

Also, the operating units 131 and 132 can receive various inputs. For example, the operating unit 131 receives commands such as start and end a call, and the operating unit 132 receives commands such as to control the volume of the sound output from the audio output unit 152 or to convert the display unit 151 into a touch recognition mode.

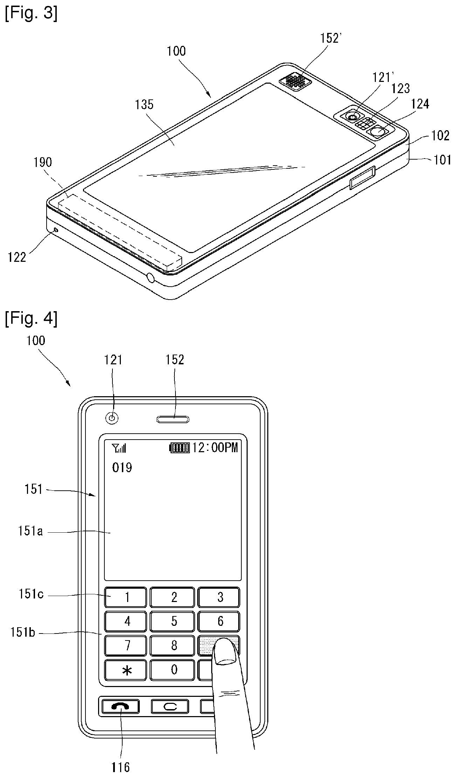

Next, FIG. 3 is a rear perspective view of the handheld terminal shown in FIG. 2 according to an embodiment of the present invention. As shown in FIG. 3, a camera 121' is additionally attached to the rear side of the terminal body, that is, the rear case 102. In this configuration, the camera 121' has a photographing direction that is opposite to that of the camera 121 shown in FIG. 2 and can have pixels different from those of the camera 121 shown in FIG. 2.

For example, in one example, it is preferable that the camera 121 has low pixels such that it can capture an image of the face of a user and transmit the image to a receiving part during video telephony while the camera 121' has high pixels such that it can capture an image of a general object and does not immediately transmit the image in many situations. The cameras 121 and 121' can also be attached to the terminal body such that they can be rotated or popped-up.

As shown in FIG. 3, a flash bulb 123 and a mirror 124 are additionally arranged in proximity to the camera 121'. The flash bulb 123 lights an object when the camera 121' takes a picture of the object, and the mirror 124 is used for the user to look at his or her face when the user wants to take a picture of themselves using the camera 121'.

An audio output unit 152' is also additionally provided on the rear side of the terminal body. In this embodiment, the audio output unit 152' can achieve a stereo function with the audio output unit 152 shown in FIG. 2 and be used in a speaker phone mode when the terminal is used for a telephone call.

A broadcasting signal receiving antenna can also be additionally attached to a side of the terminal body in addition to an antenna for telephone calls. The antenna forming a part of the broadcasting receiving module 111 shown in FIG. 1 can be set in the terminal body such that the antenna can be pulled out of the terminal body.

In addition, the power supply 190 for providing power to the handheld terminal 100 is set in the terminal body, and can be included in the terminal body or detachably attached to the terminal body. FIG. 3 also illustrates a touch pad 135 for sensing touch additionally attached to the rear case 102 of the terminal 100. Further, the touch pad 135 can be a light transmission type as the display unit 151. In this instance, when the display unit 151 outputs visual information through both sides, the visual information can be recognized through the touch pad 135.

Also, the information output through both sides of the display unit 151 can be controlled by the touch pad 135. In addition, a display can be additionally attached to the touch pad 135 such that a touch screen can be arranged even in the rear case 102. Further, the touch pad 135 operates in connection with the display unit 151 of the front case 101, and can be located in parallel with the display unit 151 behind the display unit 151. The touch panel 135 can also be identical to or smaller than the display unit 151 in size.

The interoperations of the display unit 151 and the touch pad 135 will now be described with reference to FIGs. 4 and 5. In more detail, FIGs. 4 and 5 are front views of the handheld terminal 100 and are used for explaining an operating state of the handheld terminal according to an embodiment of the present invention.

The display unit 151 can display various types of visual information in the form of characters, numerals, symbols, graphic or icons. To input the information, at least one of the characters, numerals, symbols, graphic and icons are displayed in predetermined arrangement in the form of a keypad. Also, the keypad can be referred to as a 'soft key'.

Further, FIG. 4 shows that touch applied to a soft key is input through the front side of the terminal body. The display unit 151 can be a single area or can be divided into a plurality of regions. In the latter instance, the display unit 151 is constructed such that the plurality of regions interoperate with each other.

For example, and as shown in FIG. 4, an output region 151a and an input region 151b are respectively displayed in upper and lower parts of the display unit 151. The input region 151b displays soft keys 151c that represent numerals used to input numbers such as telephone numbers. Thus, when a soft key 151c is touched, a numeral corresponding to the touched soft key is displayed on the output region 151a. Further, when the user operates a first operating unit 116, a connection of a call corresponding to a telephone number displayed on the output region 151a is attempted.

Next, FIG. 5 is an overview of the mobile terminal 100 showing that touch applied to soft keys is input through the rear side of the terminal body. FIG. 5 also shows the landscape of the terminal body while FIG. 4 shows the portrait of the terminal body. In addition, the display unit 151 is constructed such that an output image is converted according to the direction in which the terminal body is located.

Further, FIG. 5 shows the operation of the handheld terminal in a text input mode. As shown, the display unit 151 includes a touch pad display 135 having an output region 135a and an input region 135b. A plurality of soft keys 135c indicating at least one of characters, symbols and numerals are also arranged in the input region 135b. Further, in this embodiment, the soft keys 135c are arranged in the form of QWERTY keys.

Thus, when the soft keys 135c are touched through the touch pad 135, the characters, numerals and symbols corresponding to the touched soft keys 135c are displayed on the output region 135a. Touch input through the touch pad 135 can prevent the soft keys 135c from being covered with user's fingers when the soft keys 135c are touched as compared to touch input through the display unit 151. Further, when the display unit 151 and the touch pad 135 are transparent, the user can see his or her fingers located behind the terminal body, and thus can select items by touching the backside or surface of the displayed keys 135c.

In addition, the user can scroll the display unit 151 or the touch pad 135 to move an object displayed on the display unit 151, for example, by using a cursor or a pointer located on an icon. Also, when the user moves his or her finger on the display unit 151 or the touch pad 135, the controller 180 can visually display the user's finger moving path on the display unit 151. This is useful to edit an image displayed on the display unit 151.

Also, when the display unit 151 (touch screen) and the touch pad 135 are simultaneously touched within a predetermined period of time, a specific function of the terminal can be executed. For example, the user can clamp the terminal body using their thumb and index finger. This specific function can include activating or deactivating the display unit 151 or the touch pad 135, for example.

The proximity sensor described with reference to FIG. 1 will now be explained in more detail with reference to FIG. 6. That is, FIG. 6 is a conceptual diagram used for explaining a proximity depth of the proximity sensor.

As shown in FIG. 6, when a pointer such as a user's finger approaches the touch screen, the proximity sensor located inside or near the touch screen senses the approach and outputs a proximity signal. Further, the proximity sensor can be constructed such that it outputs a proximity signal according to the distance between the pointer approaching the touch screen and the touch screen (referred to as "proximity depth").

Also, the distance in which the proximity signal is output when the pointer approaches the touch screen is referred to as a detection distance. The proximity depth can be determined using a plurality of proximity sensors having different detection distances and comparing proximity signals respectively output from the proximity sensors.

FIG. 6 shows the section of the touch screen in which proximity sensors capable of sensing three proximity depths are arranged. Of course, proximity sensors capable of sensing less than three or more than three proximity depths can be arranged in the touch screen.

Thus, as shown in FIG. 6, when the pointer (user's finger in this example) completely comes into contact with the touch screen (DO), the controller 180 recognizes this action as the contact touch. On the other hand, when the pointer is located within a distance D1 from the touch screen, the controller 180 recognizes this action as a proximity touch of a first proximity depth.

Similarly, when the pointer is located in a range between the distance D1 and a distance D2 from the touch screen, the controller 180 recognizes this action as a proximity touch of a second proximity depth. When the pointer is located in a range between the distance D2 and a distance D3 from the touch screen, the controller 180 recognizes this action a proximity touch of a third proximity depth. Also, when the pointer is located at longer than the distance D3 from the touch screen, the controller 180 recognizes this action as a cancellation of proximity touch.

Accordingly, the controller 180 can recognize the proximity touch as various input signals according to the proximity distance and proximity position of the pointer with respect to the touch screen and perform various operations according to the input signals.

The mobile device 100 of Fig. 1 may be configured to operate within a communication system which transmits data via frames or packets, including both wireless and wireline communication systems, and satellite-based communication systems. Such communication systems utilize different air interfaces and/or physical layers.

Examples of such air interfaces utilized by the communication systems include example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of non-limiting example only, further description will relate to a CDMA communication system, but such teachings apply equally to other system types.

Referring now to Fig. 7, a CDMA wireless communication system is shown having a plurality of mobile devices 100, a plurality of base stations 200, base station controllers (BSCs) 210, and a mobile switching center (MSC) 280. The MSC 220 is configured to interface with a conventional public switch telephone network (PSTN) 230. The MSC 220 is also configured to interface with the BSCs 210. The BSCs 210 are coupled to the base stations 200 via backhaul lines. The backhaul lines may be configured in accordance with any of several known interfaces including, for example, E1/T1, ATM, IP, PPP, Frame Relay, HDSL, ADSL, or xDSL. It is to be understood that the system may include more than two BSCs 210.

Each base station 200 may include one or more sectors, each sector having an omnidirectional antenna or an antenna pointed in a particular direction radially away from the base station 270. Alternatively, each sector may include two antennas for diversity reception. Each base station 200 may be configured to support a plurality of frequency assignments, with each frequency assignment having a particular spectrum (e.g., 1.25 MHz, 5 MHz).

The intersection of a sector and frequency assignment may be referred to as a CDMA channel. The base stations 200 may also be referred to as base station transceiver subsystems (BTSs). In some cases, the term "base station" may be used to refer collectively to a BSC 210, and one or more base stations 200. The base stations may also be denoted "cell sites." Alternatively, individual sectors of a given base station 200 may be referred to as cell sites.

A terrestrial digital multimedia broadcasting (DMB) transmitter 240 is shown broadcasting to portable devices 100 operating within the system. The broadcast receiving module 111 (Fig. 1) of the portable device is typically configured to receive broadcast signals transmitted by the DMB transmitter 240. Similar arrangements may be implemented for other types of broadcast and multicast signaling (as discussed above).

Fig. 7 further depicts several global positioning system (GPS) satellites 250. Such satellites facilitate locating the position of some or all of the portable devices 100. Two satellites are depicted, but it is understood that useful positioning information may be obtained with greater or fewer satellites. The position information module 115 (Fig. 1) of the portable device 100 is typically configured to cooperate with the satellites 250 to obtain desired position information. It is to be appreciated that other types of position detection technology, (i.e., location technology that may be used in addition to or instead of GPS location technology) may alternatively be implemented. If desired, some or all of the GPS satellites 250 may alternatively or additionally be configured to provide satellite DMB transmissions.

During typical operation of the wireless communication system, the base stations 200 receive sets of reverse-link signals from various mobile devices 100. The mobile devices 100 are engaging in calls, messaging, and other communications. Each reverse-link signal received by a given base station 200 is processed within that base station. The resulting data is forwarded to an associated BSC 210. The BSC provides call resource allocation and mobility management functionality including the orchestration of soft handoffs between base stations 200. The BSCs 210 also route the received data to the MSC 220, which provides additional routing services for interfacing with the PSTN 230. Similarly, the PSTN interfaces with the MSC 220, and the MSC interfaces with the BSCs 210, which in turn control the base stations 200 to transmit sets of forward-link signals to the mobile devices 100.

In what follows, embodiments of the present invention are described.

The memory (or storage unit) 160 can store a map. The map is either pre-stored in the memory 160 or received from the outside through the radio communication unit 110. When the map is received from the outside, the map can be either stored permanently or temporarily in the memory 160.

Various methods of the present invention can be implemented in the mobile terminals/systems of FIGs. 1-8, or can be implemented in other suitable devices/ systems.

### < Matching/storing received messages and location information>

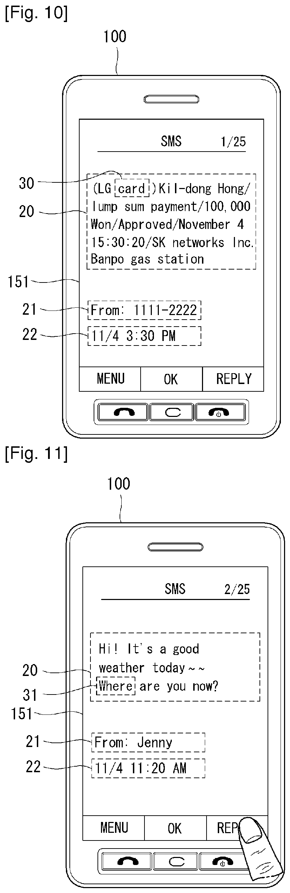

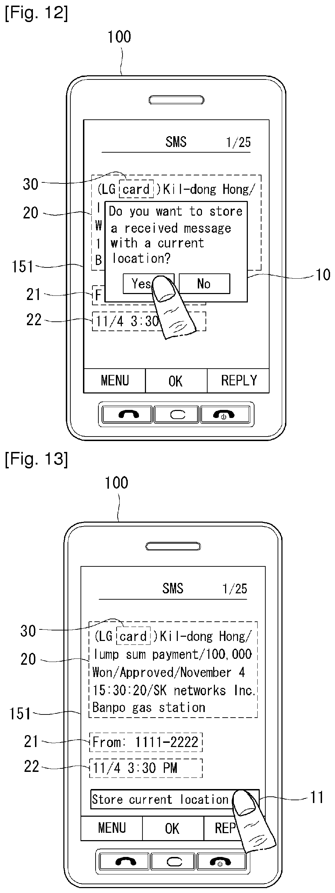

FIG. 9 is a flow diagram of a method for managing messages of a mobile terminal according to a first embodiment of the present invention. FIGs. 10 and 11 illustrate examples of a screen of a mobile terminal, displaying received messages. FIGs. 12 and 13 illustrate examples of a user interface of a mobile terminal for user inquiry.

The method for managing messages of a mobile terminal according to the first embodiment of the present invention can be implemented in a mobile terminal 100 described with reference to FIGs. 1 to 8. In the following, with reference to FIG. 9 and related drawings, the method for managing messages of the mobile terminal according to the first embodiment of the present invention and operations of the mobile terminal 100 to implement the method are described in detail.

Referring to FIG. 9, the controller 180 receives messages from the outside through the radio communication unit 110, at step S100.

A message referred to in the present document may include a short message service (SMS), a multimedia messaging service (MMS), and e-mail. If the message is SMS or MMS, the message can be received through the mobile communication module 112. On the other hand, if the message corresponds to an e-mail, the message can be received through the wireless Internet/network module 113.

FIGs. 10 and 11 illustrate examples of a screen of the display unit 151 in the mobile terminal 100, for displaying such received messages. The screen displaying the received messages can include various types of information. As shown in FIGs. 10 and 11, the display screen of a received message may comprise contents of a message 20, sender information 21, and reception time for the message 22.

The controller 180 checks the current management mode for location information of the received message at step S110. Various management modes are provided, which are used for choosing the way of managing received messages with respect to location information.

For example, the management mode can be automatic (automatic management mode) or manual (manual management mode), which can be set and changed by the user, administrator, or the terminal itself as needed. If the management mode is manual, the controller 180 obtains an approval from a user, matches the received message with location information about the place where the message was received, and stores the received message with the location information. In the following, operations of the mobile terminal when the management mode is in the manual management mode.

When the management mode is in the manual management mode, the controller 180 outputs a user interface (UI) inquiring whether to match and store the received message with location information about the place where the message was received at step S120. The location information about the place where the message was received indicates a location where the message was received, and is also referred to herein as 'message receipt location information'. For instance, if the mobile terminal 100 receives a message 'K' when the user carrying the terminal 100 was at a mall 'P' in city 'E', then the location information indicates the location where the message 'K' was received by the mobile terminal 100. For instance, here the location information for the message 'K' can be, e.g., any one of the following: name and/or address of the mall 'P', the city name/zip code of the city 'E', longitude/latitude information of the exact location in the mall 'P' where the message was received, etc.

This UI can be implemented in various ways. For example, the UI can be either displayed on the display unit 151 in the form of a pop-up window or output in the form of an audio interface through the sound output unit/module 152.

FIGs. 12 and 13 illustrate the examples of a screen displaying UIs for the user inquiry. In FIG. 12, the user inquiry UI is displayed in the form of a pop-up window 10; in FIG. 13, the user inquiry UI is displayed in the form of a functional icon 11. The user can selectively approve matching/storing of the received message with the message receipt location information through the pop-up window 10 or the functional icon 11. For example, as shown in FIG. 12, when the display unit 151 is a touch screen, the user gives his or her approval by touching "YES" icon included in the pop-up window 10 and gives his or her denial by touching "NO" icon.

Also, if the display unit 151 is a touch screen, as shown in FIG. 13, the user can give his or her approval to match and store the currently received message with the message receipt location information by touching the functional icon 11.

In case of using the audio interface, the controller 180 can output audio containing an inquiry of "Do you want to store the received message with a current location?" through the sound output unit 152. The user listens to the inquiry output through the sound output unit 152 and can express whether or not to approve it by voice. The controller 180 can determine approval or denial of the user by recognizing the user's voice fed from the microphone 122. For example, the user can approve matching/ storing of the received message with the message receipt location information by saying "YES"; on the contrary, the user can disapprove matching/storing of the received message with the message receipt location information by saying "NO".

The controller 180, if the user gives his or her approval through the displayed user inquiry UI, carries out the steps of S 170 and S 180 to be described later.

On the other hand, the controller 180, if the user gives disapproval through the displayed user inquiry UI, stores the message received at the S100 step in the memory 160, at step S140. The S140 step can employ the same procedure commonly used for storing received messages in a mobile terminal.

If step S110 determines that the management mode is in the automatic mode, the controller 180, without intervention of the user, can match and store the message received at the S100 step with the location information about the place where the message was received. At this point, the controller 180 can apply various operating conditions as described below. In what follows, described is the automatic mode where some examples of various operating conditions can be applied.

The controller 180 can determine whether predefined keywords are included in the received message (criterion of keyword) at step S150 and/or whether a sender that sent the received message is registered in a phonebook stored in the memory 160 (criterion of phonebook registration), at step S160. Here, the phonebook registration is merely an example and other types of contact book registrations may be used.

The controller 180, if the received message meets neither criterion of the keyword or the phonebook registration, can carry out the aforementioned S140 step.

The controller 180, if the received message meets either criterion of the keyword or the phonebook registration, carries out steps S170 and S180 to be described below. It can also be set in such a way that steps S170 and S180 can be carried out only when the received message meets both criteria of the keyword and the phonebook registration.

The keywords can be defined or changed by the user. For example, the user can choose words, e.g., "where" and "card" as keywords to be used for the keyword criterion.

For example, if the user pays by using a credit card at a membership store, a company corresponding to the credit card can provide the user with a service of transmitting a message of approval or denial of the credit card use. If the user has already subscribed to the service, the user can receive a message related to the use of the user's credit card. For this case, the message transmitted from the credit card company can include a company name such as "XX card" or a brand name. Therefore, the user, by choosing the word of "card" as the keyword, can match and store in the mobile terminal location information about the place where the user uses that credit card with the message about the credit card use. As a result, the user can review the received messages and the related message receipt location information, and confirm that the credit cards are properly used (e.g., user can immediately check and identify an unauthorized use of a credit card). The use of the message receipt location information has wide applicability and benefits.

As examples of keywords, the message illustrated in FIG. 10 contains the keyword of "card" 30 and the message in FIG. 11 contains the keyword of "where" 31.

Whether to carry out the steps of S170 and S180 described below may depend on the sender of the received message, one example of which corresponds to the criterion of phonebook registration.

The user can choose or change the criterion for a message sender to carry out the steps of S170 and S180. For example, the user can set up in such a way that the steps of S170 and S180 described below are carried out for a sender not registered in the phonebook rather than a sender registered in the phonebook. Also, the user can set up in such a way that the steps of S170 and S180 are carried out for a message sender whose phone number contains particular numbers or begins with particular numbers such as "703", "571", "060", "070", or "080". The user still can set up the operation in such a way that the steps of S170 and S180 are carried out differently for separate entities registered in the phonebook of the terminal.

In the following, a procedure of matching and storing the received message with the location information about the message reception place according to an embodiment of the present invention will be described.

The controller 180 acquires location information about the place where the message has been received (message receipt location information) at step S170. For example, the controller 180 can acquire the location information by controlling the position information module 115. The location information can correspond to the location information about a place where the mobile terminal 100 is located at the time the mobile terminal 100 receives the message.

As described earlier, the location information can be obtained through various ways such as Global Navigation Satellite System (GNSS), cell identification (cell-ID), or wireless LAN-based location sensing technique.

The controller 180 matches and stores the location information obtained at the S170 step with the received message, at step S180. The received message to which the S180 step has been applied can now have particular location information. The location information corresponding to the received message can be stored in various formats. For example, the location information can include latitude and longitude information. In addition or in the alternative, the location information can include a geographical name corresponding to the latitude and longitude.

For example, the location information about the place where the message illustrated in FIG. 11 is received by the mobile terminal 100 can include latitude and longitude information such as "37 degrees 29 minutes 54 seconds North, 127 degrees 1 minute 37 seconds East". The controller 180 can obtain the geographical name corresponding to the latitude and longitude information by using map data stored in the memory 160. For example, the geographical name corresponding to "37 degrees 29 minutes 54 seconds North, 127 degrees 1 minute 37 seconds East" can be "Gangnam station". The message illustrated in FIG. 11, therefore, can be matched and stored with the latitude and longitude information of "37 degrees 29 minutes 54 seconds North, 127 degrees 1 minute 37 seconds East" and/or location information including the corresponding geographical name of "Gangnam station". For instance, the received message and the corresponding message receipt location information can be stored together in the memory 160. Here, the message receipt location information can be stored in association with the received message so that it can be retrieved or managed in association with the received message.

This document describes embodiments that make various uses of received messages matched and stored with location information according to the first embodiment described earlier. In what follows, described are embodiments where the received messages with which location information (e.g., message receipt location information) has been matched according to the first embodiment are applied to the functions of writing a reply to the received message and providing a message reception history.

### <Writing a reply to a received message-A>

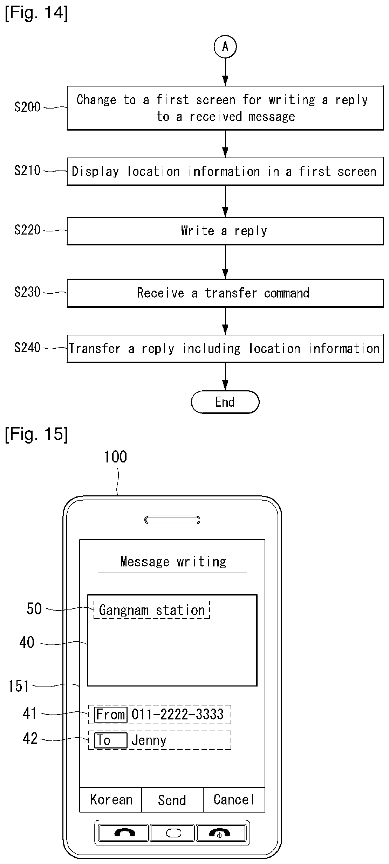

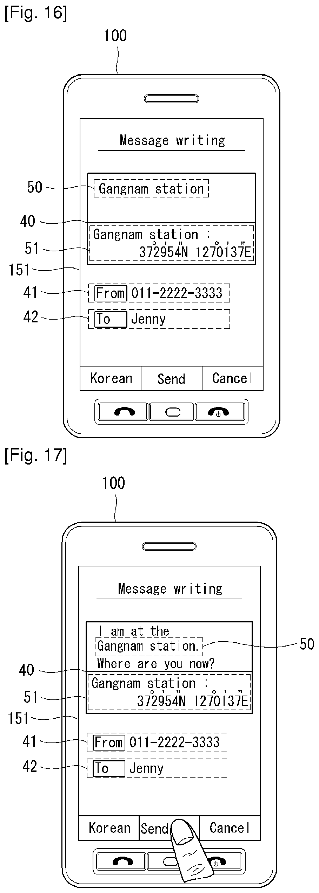

FIG. 14 illustrates a flow diagram of a method for managing messages of a mobile terminal according to a second embodiment of the present invention. FIGs. 15 and 16 illustrate examples of a screen for writing a reply to a received message according to the second embodiment of the present invention. FIG. 17 illustrates an example of a screen where the steps of S220 and S230 of FIG. 14 are carried out.

The method for managing messages of a mobile terminal according to the second embodiment of the present invention can be implemented in a mobile terminal 100 described with reference to FIGs. 1 to 8. In the following, with reference to FIG. 14 and related drawings, the method for managing messages of a mobile terminal according to the second embodiment of the present invention and operations of a mobile terminal 100 to implement the method are described in detail.

The embodiments of FIG. 14 and other subsequent figures can be applied, either after a received message and its associated message receipt location information are stored in the memory 160 or when the message is just received by the mobile terminal (and may not have been necessarily stored in the memory 160).

Referring to FIG. 14, the controller 180 can enter into a first screen for writing a reply to the received message according to the user's command at step S200. As the controller 180 enters into the first screen, location information (e.g., message receipt location information for the received message) is displayed on the first screen of the display unit 151 at step S210.

The S210 step can be carried out automatically. FIGs. 15 and 16 illustrate examples of such a screen for writing a reply as the user selects a "REPLY" function shown in FIG. 11. for instance, the screen shown in FIG. 15 or 16 may appear automatically when the user selects a "REPLY" function on the screen of FIG. 11.

The screen for writing a reply can include a message writing window 40, sender information 41, and receiver information 42. Also, the screen for writing a reply can include an area for attaching files. Other formats can be used for the screen for writing a reply.

The screen for writing a reply illustrated in FIG. 15 displays first location information 50 of, e.g., "Gangnam station" stored in accordance with the message shown in FIG. 11. The screen for writing a reply illustrated in FIG. 16 displays the first location information 50 and also second location information 51 indicating latitude and longitude information corresponding thereto. The first location information 50 and the second location information 51 correspond to the location information (e.g., message receipt location information) stored according to the aforementioned first embodiment. In the screen for writing a reply illustrated in FIG. 15, the second location information 51 can be tagged to a current reply message.

For example, the second location information 51 of FIG. 16 can be hidden information with respect to the first location information 50. During a message transfer procedure described later, the second location information 51 can be transferred with the message.

The user can write a message/contents in the screen for writing a reply at step S220. The reply message includes the location information 50, 51, which can be integrated into a part of the contents of the message as shown in FIG. 17. The controller 180 can receive a command from the user demanding the transfer of the message written in the S220 step, at step S230. FIG. 17 illustrates an example of a screen where the steps of S220 and S230 are carried out. FIG. 17 illustrates a situation where the user touches a "SEND" button to enter the message transfer command after he or she finishes writing the message where the display unit 151 corresponds to a touch screen.

The controller 180 transfers the reply message or the message just composed through the radio communication unit 110 according to the transfer command at step S240. The message transferred at the S240 step including the location information 51 and/or 50 is delivered to a designated recipient of the message, e.g., a message sender of the aforementioned first embodiment. In the above and below discussions, although writing a reply message to a received message is discussed, the features discussed in association with these embodiments can be applied to writing other types of messages, e.g., writing a forward message in response to a received message.

### <Writing a reply to a received message-B>

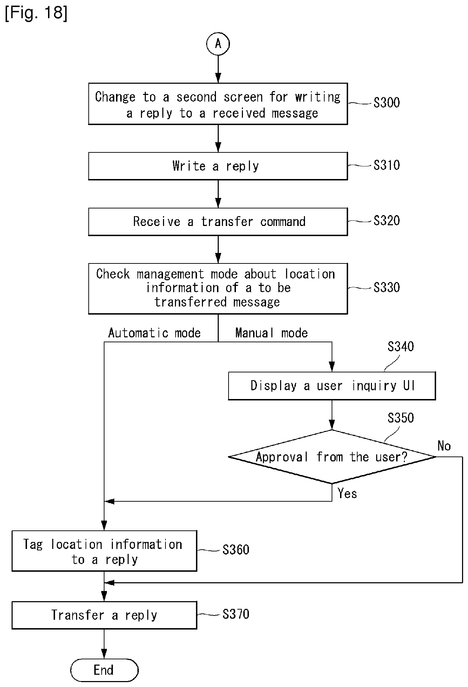

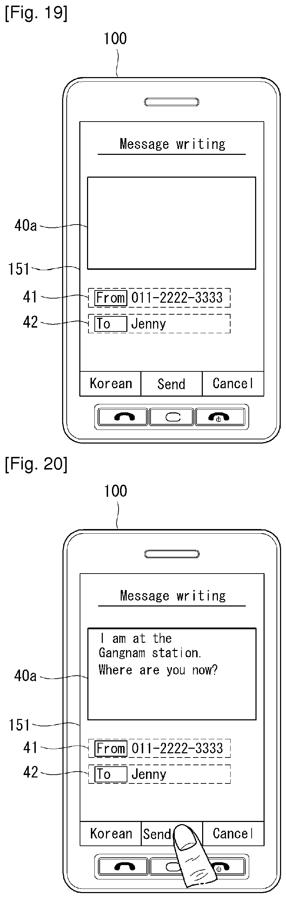

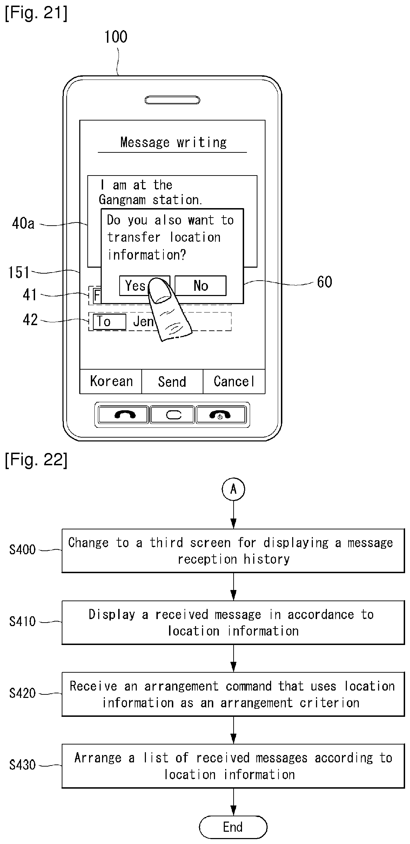

FIG. 18 illustrates a flow diagram of a method for managing messages of a mobile terminal according to a third embodiment of the present invention. FIG. 19 illustrates a screen change for writing a reply according to the third embodiment of the present invention. FIG. 20 illustrates an example where the steps of S310 and S320 of FIG. 18 are carried out. FIG. 21 illustrates an example where the step S340 of FIG. 18 is carried out.

The method for managing messages of a mobile terminal according to the third embodiment of the present invention can be implemented in a mobile terminal 100 described with reference to FIGs. 1 to 8. In the following, with reference to FIG. 18 and related drawings, the method for managing messages of a mobile terminal according to the third embodiment of the present invention and operations of a mobile terminal 100 to implement the method are described in detail.

The controller 180 can enter into a screen for writing a reply to the received message according to the user's command at step S300. This screen is also referred to herein as a second screen. The S300 step is identical to or similar to the S200 step, except that the contents of the screen may vary. FIG. 19 illustrates a new screen for writing a reply according to the third embodiment of the present invention. It is assumed that FIG. 19 is a screen for writing a reply to a message illustrated in FIG. 11.

The user can write a reply on a message writing window 40a at step S310 and give a transfer command (e.g., by selecting a Send function) to the mobile terminal 100 at step S320. FIG. 20 illustrates an example where the steps of S310 and S320 are carried out.

The controller 180 checks a management mode for location information of the message to be transferred at step S330. The management mode for the location information of the message to be transferred is used to determine whether to send the location information together at the time of sending a message and to provide a user interface related thereto.

For example, the management mode for the location information of a message to be transferred can be automatic (automatic mode) or manual (manual mode). The automatic mode indicates sending automatically a message along with the corresponding location information (e.g., message receipt location information) without the user's approval. On the other hand, the manual mode indicates sending a message along with the corresponding location information (e.g., message receipt location information) upon the approval of the user.

The controller 180, if the management mode is found to be in the automatic mode at step S330, can automatically carry out the S360 step described later.

On the other hand, the controller 180, if the management mode is found to be in the manual mode at step S330, outputs a user inquiry UI for inquiring whether or not to send relevant location information together with the message that has been written at the S310 step, at step S340. The user inquiry UI displayed in the S340 step can be implemented in various ways as the user inquiry UI displayed in the S120 step of FIG. 9. For example, a pop-up window containing the contents for user inquiry can be displayed on the display unit 151 or the same contents can be output in the form of audio through the audio output module 152. FIG. 21 illustrates an example of displaying a user inquiry UI output from the S340 step in the form of a pop-up window 60.

The controller 180 determines whether or not the user's approval is received according to the information received through the user inquiry UI that is output from the S340 step, at step S350. If it is found that the user has not approved sending the location information with the message according to the result of the S350 step, the controller 180 at step S370 sends only the reply message that is written at the S310 step. Here, the location information is preferably the message receipt location information stored in association with the original message to which the reply message is generated as a response.

If the management mode for the location information of the message to be transferred is determined to be in the automatic mode at step S330 or it is found that the user's approval has been received at step S350, the controller 180 tags (or attaches) the location information to the message at step S360 and sends the message to which the location information is tagged through the radio communication unit 110 at step S370. Here, the location information is preferably the message receipt location information stored in association with the original message to which the reply message is generated as a response. The location information tagged at the S360 step can correspond to at least one of the first and the second location information of the second embodiment of the present invention described earlier. For example, the location information tagged at the S360 step can include the latitude and longitude information and/or a geographical name corresponding thereto.

### <History of a received message>

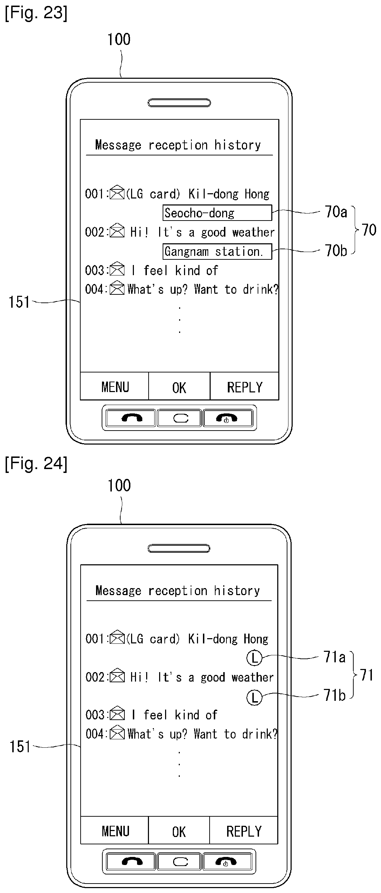

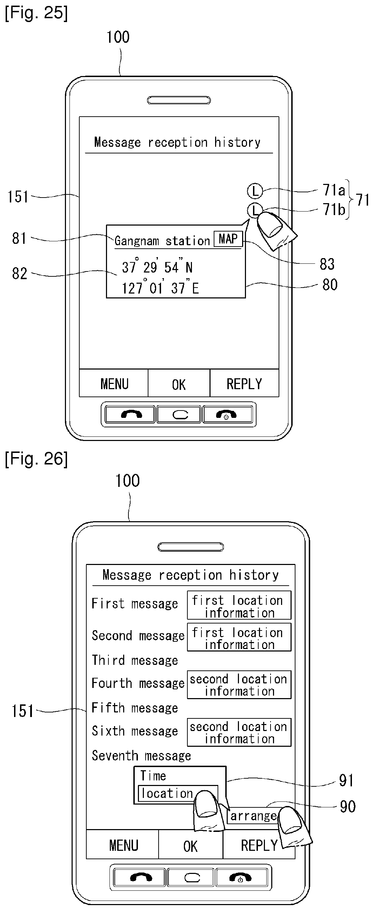

FIG. 22 illustrates a flow diagram of a method for managing messages of a mobile terminal according to a fourth embodiment of the present invention. FIGs. 23 to 25 illustrate the examples of a screen where the steps of S400 and s410 of FIG. 22 are carried out. FIGs. 26 to 28 illustrate the examples of a screen where the steps of S420 and S430 of FIG. 22 are carried out.

The method for managing messages of a mobile terminal according to the fourth embodiment of the present invention can be implemented in a mobile terminal 100 described with reference to FIGs. 1 to 8. In the following, with reference to FIG. 22 and related drawings, the method for managing messages of a mobile terminal according to the fourth embodiment of the present invention and operations of a mobile terminal 100 to implement the method are described in detail.

In general, a mobile terminal equipped with a function of message transfer and reception provides a transfer and reception history of a message. The user can check message transfer and reception details through the message transfer and reception history.

Referring to FIG. 22, the controller 180 enters into a screen displaying a message reception history according to the user's command at step S400. This screen is also referred to herein as a third screen and is a screen of the display unit 151.

As the controller 180 enters into the third screen, a plurality of received messages are displayed in correspondence to location information at step S410. It should be noted that all the messages included in the message reception history may not be necessarily displayed in correspondence to location information. It is because as described in the first embodiment of the present invention, a received message may or may not be matched and stored with the location information, depending on the situation. For example, among the received messages for the mobile terminal 100, some received messages will have location information stored in association thereto and some received message will not. The message reception history can display all such messages or only those messages with the location information or without the location information depending on the user preference/manipulation. Here, the location information is preferably the message receipt location information discussed above.

At the S410 step, the location information (e.g., message receipt location information) corresponding to each received message can be displayed in various ways. FIGs. 23 to 25 illustrate examples of a screen where the S410 step is carried out, where a message reception history is displayed on the screen.

With reference to FIG. 23, the controller 180 can display a message reception history listing a plurality of received messages and any location information 70a, 70a (70) indicating geographical names at the screen positions corresponding to the respective messages displayed on the third screen. For instance, a list of received messages and any message receipt location information (indicating a location where that message was received by the mobile terminal 100) associated with each received message can be displayed on the screen. If not all messages have related location information, such messages are displayed without the location information as shown in FIG. 23 (e.g., messages 003 and 004).

If the user selects each location information 70a, 70B of FIG. 23, more detailed location information such as detailed address and/or latitude and longitude information indicating where the message was received by the mobile terminal 100 can be provided.

With reference to FIG. 24, the controller 180 can display icons 71a, 71b indicating presence of location information (e.g., message receipt location information) at the screen positions corresponding to individual messages displayed at the third screen. If the user selects the icon 71a or 71b, actual location information or more detailed location information such as detailed address and/or latitude and longitude information associated with that message can be provided, e.g., by being displayed on the screen in a pop up window or in some other means. For instance, with reference to FIG. 25, if the user selects the icon 71b by using a touch input and according to the selection, the controller 180 can provide a pop-up window 80 including specific contents of the corresponding location information. The pop-up window 80 can include a geographical name 81 and/or latitude and longitude information 82 or any other location information related to where the message was received by the mobile terminal 100. Also, the pop-up window 80 can provide an icon 83 related to a function of displaying the corresponding location on a map on the screen of the mobile terminal 100. For example, if the user selects the map display function icon 83, a map stored in the memory 160 is retrieved with reference to the corresponding location information and the corresponding location is displayed on the map. For example, the location information "Gangnam station" (metro station) is indicated on a relevant area map displayed on the screen. Further, by selecting "Gangnam station" indicated on the map, the user can get more information about "Gangnam station" (e.g., directions thereto, some interesting facts, etc.) and/or the received message associated with "Gangnam station" may be displayed.

Further, the controller 180 receives a command to arrange or organize the messages based on certain criteria, e.g., based on the location information, at step S420. As shown in FIG. 26, the controller 180 can provide an icon 90 for arranging or organizing messages included in the third screen based on a particular criterion. The user can choose an arranging criterion by selecting the arrangement icon 90. FIG. 26 illustrates a situation where the user attempts to arrange the messages in the order of place or location information by choosing the arrangement criterion of "location" at item 91. The "location", for example, can imply the location information referred to by the present invention, e.g., message receipt location information. In other examples, the received messages can be arranged in the order of other factors such as reception time, sender, etc.

The controller 180, after receiving from the user the command for arranging the messages in terms of their location information at step S420, arranges and displays the messages included in the message reception history in terms of the location information at step S430.

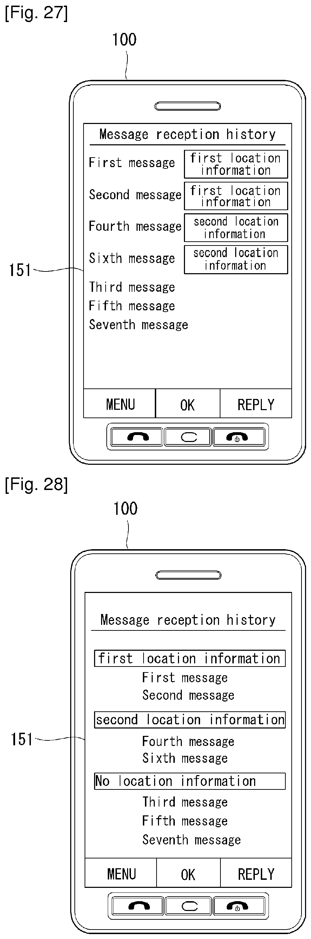

FIGs. 27 and 28 illustrate different examples of a screen where the S430 step is carried out. In FIGs. 27 and 28, a "first message" and a "second message" correspond to "first location information", and a "fourth message" and a "sixth message" correspond to "second location information". However, the first location information corresponding to the first and second messages and the second location information corresponding to the fourth and sixth messages may not perfectly coincide each other. For instance, although the location information for the first message may not be identical to the location information for the second message, the controller 180 may group them together as belonging to the first location information if they have some common area characteristics, e.g., they belong to the same city or same mall name, although the exact coordinate values may be different. The controller 180 can manage several locations belonging to a particular area as the same location. For example, although the latitude and longitude information corresponding to the first message can be somewhat different from the latitude and longitude information corresponding to the second message, they may be identified as having the first location information.

Various methods for managing messages of a mobile terminal according to the embodiments of the present invention described above can be provided in one or more computer software programs recorded on a computer-readable recording medium and to be executed in a computer or other suitable device such as a mobile terminal.

The methods for managing messages of a mobile terminal according to the embodiments of the present invention can be executed by software. When executed by software, constituting means of the present invention can correspond to code segments carrying out necessary tasks. Programs or code segments can be stored in a processor-readable medium or transferred by a transfer medium or computer data signals combined with carrier waves through a communication network.

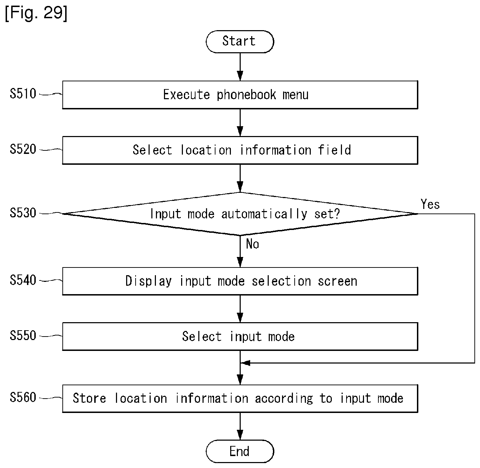

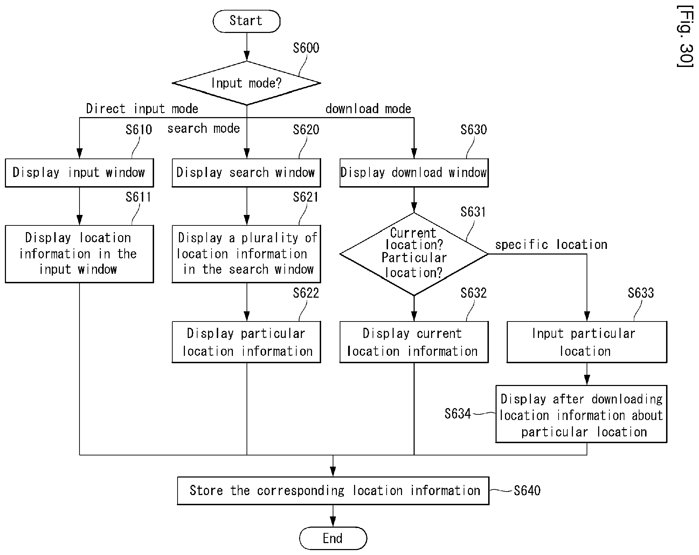

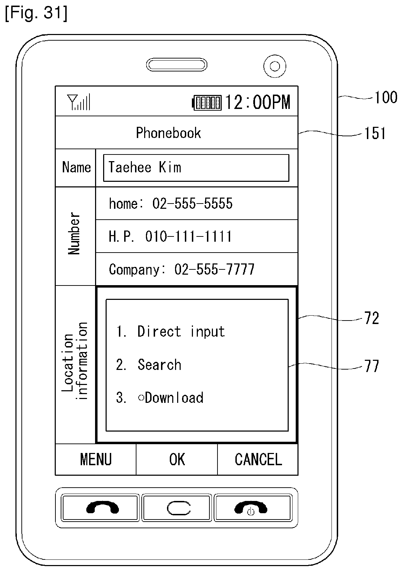

FIG. 29 illustrates a flow diagram of a method for managing a phonebook of a mobile terminal. FIG. 30 illustrates a flow diagram of a method for managing a phonebook of a mobile terminal according to an input mode at a particular step of FIG. 29. FIGs. 31 to 41 illustrate examples of a screen where the method for managing a phonebook of a mobile terminal is implemented. Although these figures illustrate the use of a phonebook in a mobile terminal, the present invention is not limited thereto and the various features discussed herein are equally applicable to any contact book or address book stored and managed in the mobile terminal.

The method for managing a contact book such as a phonebook of a mobile terminal can be implemented in a mobile terminal 100 described with reference to FIGs. 1 to 8. In the following, with reference to FIG. 29 and related drawings, the method for providing a movement path of a mobile terminal and operations of a mobile terminal 100 to implement the method are described in detail.

Referring to FIG. 29, the controller 180 executes a phonebook menu of the mobile terminal 100, at step S510. The phonebook menu can record personal information of each person or entity, e.g., name, phone number, address, e-mail, avatar, photograph, ringtone designation, memo, birthday, screen setting, and the like.

Also, the phonebook menu of the mobile terminal according to the present invention can include a location information field to which the user can input location information.

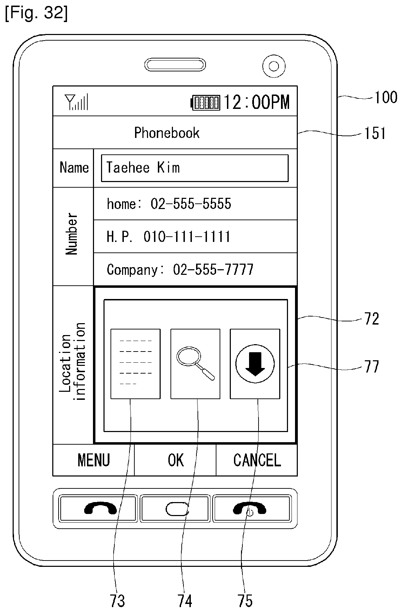

FIGs. 31 and 32 illustrate two different examples of a screen when a phonebook menu is executed according to the present invention. As shown in FIGs. 31 and 32, a phonebook menu screen includes a location information field 72 to which the user can input location information.

The controller 180 selects the location information field 72 through the user's operation of the user input unit 130 or the user's touch operation on the corresponding area in the case of a touch screen at step S520.

The controller 180 checks whether such an input mode is set automatically at step S530. If the input mode is set automatically, display of a selection screen 77 shown in FIGs. 31 and 32 is omitted and screens corresponding to the already designated/set input mode can be displayed. Description of screens corresponding to a designated input mode will be given later.

If the input mode is not set automatically, as shown in FIGs. 31 and 32, an input mode selection screen 77 is displayed at the location information field 72 or other location of the display unit 151, at step S540. The input mode selection screen 77 can be implemented in various ways.

For example, as shown in FIG. 31, the input mode selection screen 77 displays various forms of input modes in the form of a pop-up window, thereby enabling the user to choose an input mode. In another example, as shown in FIG. 32, the user can choose an input mode as various forms of input modes in the form of multiple icons 73, 74, 75 are displayed on the input mode selection screen 77.

There can be various forms of input modes: 1. direct input mode, 2. search mode, and 3. download mode. FIG. 31 displays various forms of input modes on the pop-up window of the input mode selection screen 77 in the form of a text; whereas FIG. 32 displays icons corresponding to the respective input modes on the input mode selection screen 77.

For example, multiple icons corresponding to the various forms of input modes can be displayed: 1. icon corresponding to direct input mode 73, 2. icon corresponding to search mode 74, and 3. icon corresponding to download mode 75.

Meanwhile, although FIGs. 31 and 32 illustrate only the input modes of '1. direct input mode, 2. search mode, and 3. download mode,' the input mode is not limited to those illustrated but modification and addition of an input mode by the user are still allowed.

The controller 180 receives a selection signal about one input mode selected among the various input modes displayed on the input mode selection screen 77 illustrated in FIGs. 31 and 32, at step S550. Afterwards, location information is stored in the mobile terminal according to the selected input mode at step S560.

At this point, selection of a particular input mode on the input mode selection screen 77 and a method for storing location information according to the selected particular input mode are described in more detail with reference to FIG. 30. FIG. 30 illustrates a flow diagram of an example of a method for managing a phonebook of a mobile terminal according to the input mode selected at the steps of S550 and S560 of FIG. 29.

Referring to FIG. 30, the controller 180, after displaying an input mode selection screen 77, receives a selection signal for multiple input modes displayed on the input mode selection screen 77, at step S600. The multiple input modes include, e.g., direct input mode, search mode, and download mode.

### <Direct input mode>

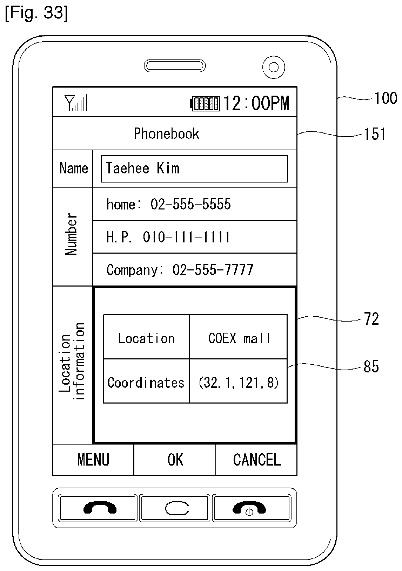

Direct input mode is described with reference to FIG. 33. FIG. 33 illustrates an example of a screen when direct input mode is selected.

The controller 180, as shown in FIG. 33, if the user selects "1. Direct input" from the pop-up window of FIG. 31 or an icon 73 corresponding to the direct input mode from FIG. 32, displays an input window 85 where the user can manually input location information in the location information field 72, at step S610.

If the user inputs desired location information in the input window 85, the input location information is displayed in the input window 85, at step S611. The location information can be stored in various ways. For example, the location information can include latitude and longitude information.

Also, the location information can include a geographical name corresponding to the latitude and longitude. For example, as shown in FIG. 33, the location information can include (32.1, 121.8) which are latitude and longitude values. At this point, (32.1, 121.8) can represent 32.1 degrees of north and 121.8 degrees of east.

Also, a geographical name corresponding to the latitude and longitude value of (32.1, 121.8) can be input together. For example, a geographical name corresponding to the latitude and longitude value of (32.1, 121.8) can be COEX mall, which is input to the input window 85.

In addition, the location information entered into the input window 85 can be stored in the memory 160 simultaneously and automatically at the input time of the location information. In a variation, the location information can be stored after an inquiry screen asking the user whether or not to store the location information in the memory 160 is displayed and an approval command for the corresponding inquiry is received at step S640.

The location information directly entered by the user into the input window 85 is stored in association with or within a corresponding contact entry of the phonebook. For instance, in the example of FIG. 33, the location information entered for a phonebook entry for "Taehee Kim" is stored within the 'Taehee Kim" entry in the phonebook of the mobile terminal. Here, the location can be any location information that the user desires to store in association with the particular phonebook entry, and can be, e.g., location information indicating a location where a particular message from this entry ("Taehee Kim") was received by the mobile terminal 100 such as message receipt location information, or other location information.

### <Search mode>

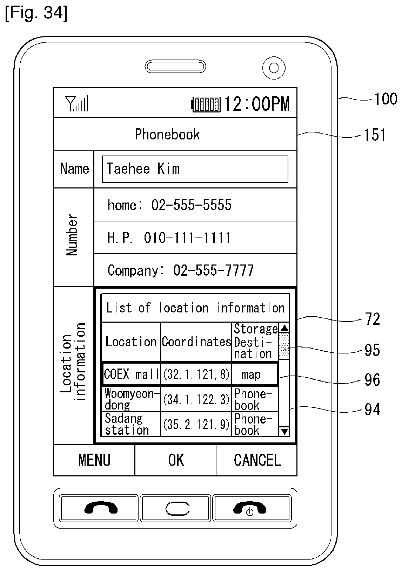

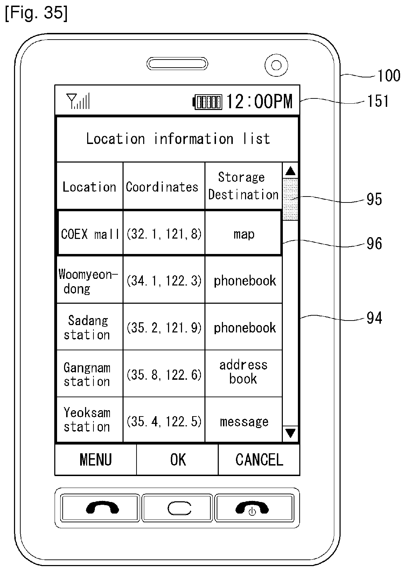

Search mode is described with reference to FIGs. 34 and 35. FIGs. 34 and 35 illustrate examples of a screen of the mobile terminal when the search mode is selected in association with the method of FIGs. 29 and 30.

The controller 180, as shown in FIG. 34, if the user selects "2. Search" from the pop-up window of FIG. 31 or an icon 74 corresponding to the search mode of FIG. 32, displays a search window 94 where the user can search the memory 160 (or other storage unit) of the mobile terminal 100 for location information, at step S620. The search window 94, as shown in FIG 34, can be displayed in the location information field 72 or as shown in FIG. 35, displayed after being changed to a different screen.

The controller 180 displays on the search window 94 a plurality of different location information stored in the memory 160, at step S621. The controller 180, when the plurality of location information stored in the memory are displayed in the search window 94, can display on the display unit 151 an indicator 96 for designating one location information selectable from among the plurality of location information.

The indicator 96 can be moved among the plurality of location information by a command signal received from the user through the user input unit 130. For example, the user, by manipulating arrow keys equipped in a keypad or using a touch screen, can move the indicator 96 (e.g., up and down) along the displayed plurality of location information. Also, one location information from among the plurality of location information can be selected by selecting the location information where the indicator 96 is currently located, e.g., by selecting an additional button or doubling tapping on the location information on which the indicator 96 currently resides.

If the controller 180 cannot display all of location information on the search window 94 within the full screen or within the designated portion of the screen, a scroll bar 95 can be provided for the display unit 151. The user, by manipulating the scroll bar 95, can scroll up and down (and/or right or left) on the screen.

Subsequently, if the user selects through the user input unit 130 a desired location information from among the plurality of location information displayed on the search window 94, the selected location information is displayed in the location information field 72, at step S622. For instance, only the selected location information is then displayed in the location information field 72 of the particular phonebook entry, e.g., in this example, "Taehee Kim" entry.

Finally, the location information displayed in the location information field 72 can be stored after an inquiry screen asking the user whether or not to store the location information is displayed and an approval command for the corresponding inquiry is received from the user. As a variation, the location information can also be stored in the memory 160 simultaneously and automatically at the time of selecting particular location information from among the plurality of location information displayed in the search window 94, at step S640. For instance, the selected location information (e.g., COEX mall) would be stored within the corresponding phonebook entry so that when the corresponding phone book entry (e.g., "Taehee Kim" entry) is pull up subsequently, the user can view the location information, i.e., COEX mall. The selected location information can be stored in association with or within a corresponding contact entry of the phonebook.

Here, the selected location can be any location information that the user desires to store in association with the particular phonebook entry, and can be, e.g., location information indicating a location where a particular message from this entry ("Taehee Kim") was received by the mobile terminal 100 such as message receipt location information, or other location information. Further, the plurality of location information displayed as shown in FIGs. 34 and 35 for possible selection can be a list of different location information stored in the memory 160 for the particular phonebook entry (e.g., various message receipt location information for the messages sent by "Taehee Kim") or for any or all phonebook entries in the phonebook.

### <Download mode>

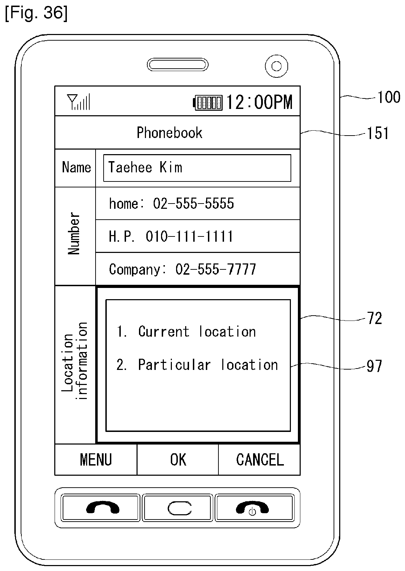

Download mode is described with reference to FIGs. 36 to 38. FIGs. 36 to 38 illustrate examples of a screen of the mobile terminal when the download mode is selected in the methods of FIGs. 29 and 30.

The controller 180, as shown in FIG. 36, if the user selects "3. Download" from the pop-up window of FIG. 31 or an icon 75 corresponding to the download mode of FIG. 32, displays a download window 97 where the user can download location information from the outside, at step S630. As shown in FIG. 36, the download window 97 displays an inquiry screen in the form of a pop-up window (or in some other form) about whether to download location information about a current location from the outside or download location information about a particular location.

The controller 180 determines whether the location information desired by the user is a current location or a particular location at step S631. If the location information about the current location is selected at the step of S631, the location information about the current location of the mobile terminal 100 is obtained and displayed in the location information field 72, at step S632. The controller 180, by controlling the position information module 115, can obtain the location information about the current location of the mobile terminal 100 shown in FIG. 36.

The location information indicating a current location of the mobile terminal 100, as described above, can be acquired in various ways such as Global Navigation Satellite System (GNSS), cell identification (cell-ID), and wireless LAN-based location sensing technique.

The location information displayed in the location information field 72 can be stored after an inquiry screen asking the user whether to store the displayed current location information in the memory 160 and an approval command for the corresponding inquiry is received from the user. The location information can also be stored in the memory 160 simultaneously and automatically at the time of acquiring the location information through the position information module 115, at step S640. Step S640 is already discussed above in detail.

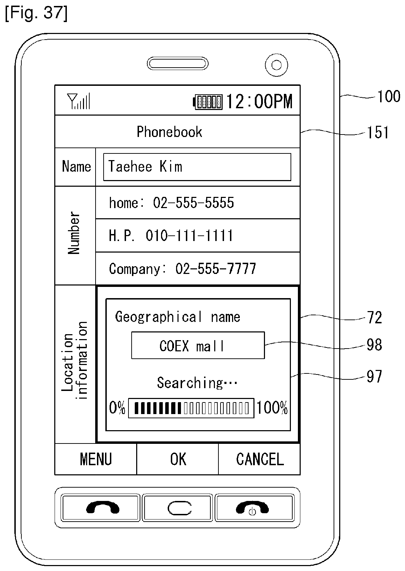

Meanwhile, if it is found that the location information about a particular location is selected at the S631 step, as shown in FIG. 37, an input window 98 is displayed within the download window 97 and the user inputs in the input window 98 information related to the location information desired by the user at step S633.

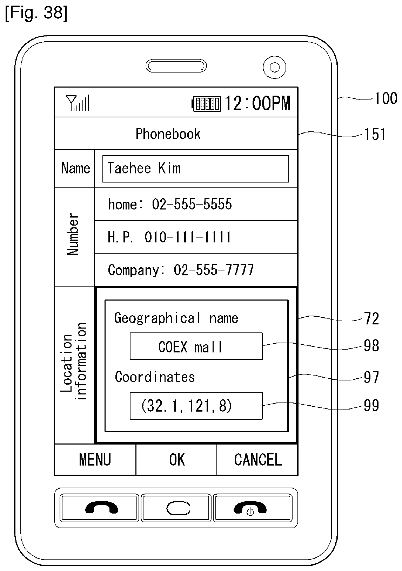

For instance, as shown in FIG. 37, if the user inputs information related to desired location information (e.g., a geographical name of COEX mall) into the input window 98 and requests a download (e.g., indicated by "Searching "), the controller 180 can obtain location information related to the geographical name entered into the input window 98 from an outside location providing server (not shown) or other outside electronic device through the radio communication unit 110 of the mobile terminal 100. For instance, the controller 180 can obtain longitude and latitude or other coordinate values for the "COEX mall" from an external location server and display the obtained values in a result window 99 as shown in FIG. 38.

For instance, as shown in FIG. 38, the controller 180 displays the obtained location information in the result window 99 of the location information field 72, at step S634. Then step S640 is performed which is discussed above. For instance, the location information displayed in the location information field 72 can be stored after an inquiry screen asking the user whether to store the location information in the mobile terminal 100 and an approval command for the corresponding inquiry is received from the user. The location information can also be stored in the memory 160 simultaneously at the time of acquiring location the information through the radio communication unit 110 or other external device, at step S640.

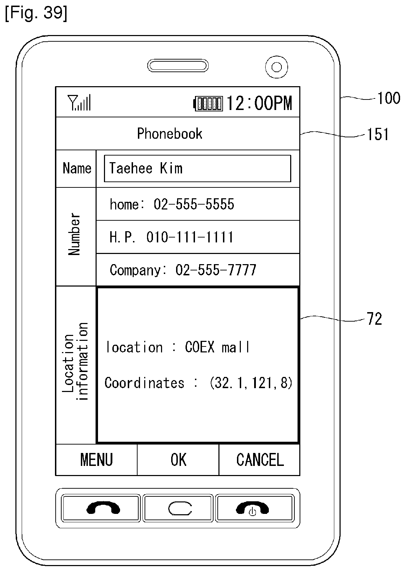

FIGs. 39 to 41 illustrate examples of a screen where location information stored in the location information field 72 is displayed to the user by a method of managing a phonebook of a mobile terminal. These examples and features discussed in association with FIGs. 39-41 are applicable to the methods of FIGs. 29 and 30 for each mode used.

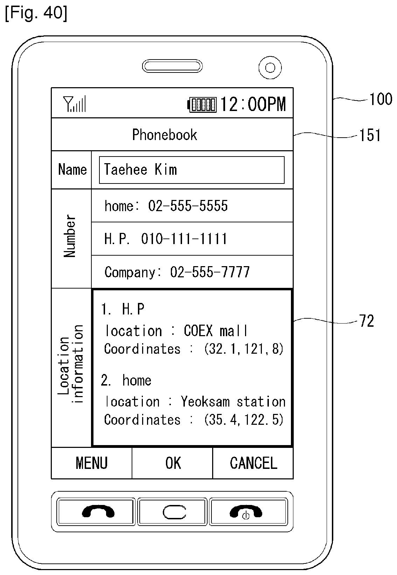

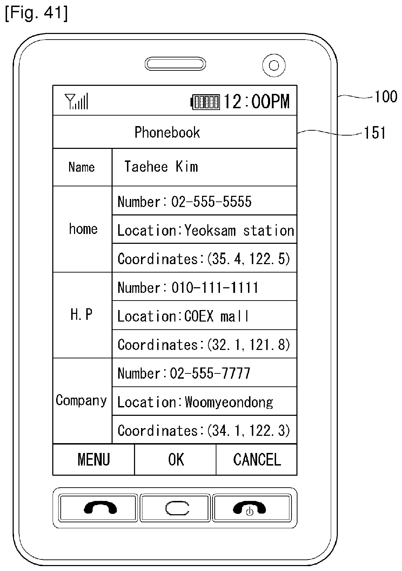

As shown in FIG. 39, location information stored according to the multiple input modes of FIGs. 29 and 30 is displayed and/or stored in the location information field 72 of a phonebook menu of the mobile terminal 100. On the other hand, as shown in FIG. 40, when multiple phone numbers are stored for each phonebook entry in a phonebook menu, location information corresponding to each of the multiple phone numbers can be displayed by storing the location information in the location information field 72. For instance, in the "Taehee Kim" entry, for his cell phone number ("1. H.P"), COEX mall information is stored and displayed in the location information field 72, and for his home phone number ("2. home"), Yeoksam station information is stored and displayed in the same location information field. Also, as shown in FIG. 41, if multiple phone numbers are stored for a phonebook entry in a phonebook menu, location information corresponding to each of multiple phone numbers can be displayed by storing together with the multiple phone numbers. The screen of FIG. 41 shows a different way to display multiple location information from a display format shown in FIG. 40.

The method for managing a phonebook of a mobile terminal described above can be recorded in a computer-readable medium as a program to be executed in a computer. The method for managing a phonebook of a mobile terminal can be executed by software. The method for managing messages of a mobile terminal according to the present invention can be executed by software. When executed by software, constituting means of the present invention correspond to code segments carrying out necessary tasks. Programs or code segments can be stored in a processor-readable medium or transferred by a transfer medium or computer data signals combined with carrier waves through a communication network.

Any feature or features discussed in connection with one embodiment of the invention can be applied to or combined within any other embodiment of the invention discussed herein.

The above described data processing method in a mobile terminal with a touch screen according to the present invention can be written as computer programs and can be implemented in digital computers that execute the programs using a computer readable recording medium. The data processing method in a mobile terminal with a touch screen according to embodiments of the present invention can be executed through software. The software can include code segments that perform required tasks. Programs or code segments can also be stored in a processor readable medium and transmitted.

The computer readable recording medium includes all types of recording devices storing data readable by computer systems. Examples of the computer readable recording medium include ROM, RAM, CD-ROM, DVD ROM, DVD-RAM, magnetic tapes, floppy disks, hard disks, and optical data storage devices. The computer readable recording medium can also be distributed over network coupled computer systems so that the computer readable code is stored and executed in a distributed fashion.

## Claims

1. A mobile terminal (100) comprising:
a storage unit (160);
a communication unit (110) configured to receive or transfer a message;
a location information unit (115) configured to obtain location information indicating a location of the mobile terminal; and
a controller (180);
**characterized in that** the controller (180) is configured to store the obtained location information in association with the message in the storage unit if the message meets a predetermined criterion,
wherein the predetermined criterion comprises a predefined keyword being included in the received message, a sender of the received message being registered in a phonebook, or a particular phone number of the received message containing a particular number..

2. The mobile terminal of claim 1, wherein the location information unit (115) is configured to obtain the location information by using one of the following:
a satellite system including at least one of GPS, GALILEO, GLONASS, COMPASS, and QZSS;
communication with at least one base station included in a wireless communication system; or
communication with at least one access point included in a wireless LAN system.

3. The mobile terminal of claim 1, wherein if there is a user's approval, the controller is configured to match the received message with the location information indicating the location where the message is received, and to store the matched message and location information in the storage unit (160).

4. The mobile terminal of claim 1, further comprising:
a display (151),
wherein if a reply screen for writing a reply to the received message is displayed on the display (151), the controller (180) is configured to display additionally the obtained location information associated with the received message on the reply screen.

5. The mobile terminal of claim 1, further comprising:
a display (151),
wherein if a screen for displaying a message reception history of the mobile terminal is displayed on the display (151), the controller (180) is configured to additionally display the received message and the associated location information on the screen, and any other received message and message receipt location information associated thereto on the screen.

6. The mobile terminal of claim 5, wherein the displayed message reception history is arranged according to message receipt location information associated with previously received messages.

7. The mobile terminal of claim 5, wherein when particular location information is selected among all the location information displayed in the message reception history displayed on the display (151), the controller (180) is further configured to display a map on the display (151) and to plot the selected location information on the map.

## Patentansprüche

1. Mobiles Endgerät (100), das aufweist:
eine Speichereinheit (160);
eine Kommunikationseinheit (110), die konfiguriert ist, um eine Nachricht zu empfangen oder zu übertragen;
eine Standortinformationseinheit (115), die konfiguriert ist, um Standortinformationen zu erhalten, die einen Standort des mobilen Endgeräts anzeigen; und
eine Steuerung (180);
**dadurch gekennzeichnet, dass** die Steuerung (180) konfiguriert ist, um die in Verbindung mit der Nachricht erhaltenen Standortinformationen in der Speichereinheit zu speichern, wenn die Nachricht ein vorgegebenes Kriterium erfüllt,
wobei das vorgegebene Kriterium ein vordefiniertes Schlüsselwort, das in der empfangenen Nachricht enthalten ist, einen Sender der empfangenen Nachricht, der in einem Telefonbuch registriert ist, oder eine bestimmte Telefonnummer der empfangenen Nachricht, die eine bestimmte Nummer enthält, umfasst.

2. Mobiles Endgerät nach Anspruch 1, wobei die Standortinformationseinheit (115) konfiguriert ist, um die Standortinformationen unter Verwendung eines der Folgenden zu erhalten:
eines Satellitensystems, das GPS und/oder GALILEO und/oder GLONASS und/oder COMPASS und/oder QZSS umfasst;
einer Kommunikation mit wenigstens einer Basisstation, die in einem drahtlosen Kommunikationssystem enthalten ist; oder
einer Kommunikation mit wenigstens einem Zugangspunkt, der in einem drahtlosen LAN-System enthalten ist.

3. Mobiles Endgerät nach Anspruch 1, wobei die Steuerung ferner konfiguriert ist, um bei vorhandener Benutzerzustimmung die empfangene Nachricht mit den Standortinformationen, die den Standort angeben, wo die Nachricht empfangen wird, abzugleichen und die abgeglichene Nachricht und die Standortinformationen in der Speichereinheit (160) zu speichern.

4. Mobiles Endgerät nach Anspruch 1, das ferner aufweist:
eine Anzeige (151),
wobei die Steuerung (180) konfiguriert ist, um, wenn ein Antwortbildschirm zum Schreiben einer Antwort auf die empfangene Nachricht auf der Anzeige (151) angezeigt wird, zusätzlich die erhaltenen Standortinformationen in Verbindung mit der empfangenen Nachricht auf dem Antwortbildschirm anzuzeigen.

5. Mobiles Endgerät nach Anspruch 1, das ferner aufweist:
eine Anzeige (151),
wobei die Steuerung (180) konfiguriert ist, um, wenn eine Nachrichtenempfangshistorie des mobilen Endgeräts auf der Anzeige (151) angezeigt wird, zusätzlich die erhaltene Nachricht und die zugehörigen Standortinformationen und jegliche andere empfangene Nachricht und Nachrichtenempfangs-Standortinformationen, die dazu gehören, auf dem Bildschirm anzuzeigen.

6. Mobiles Endgerät nach Anspruch 5, wobei die angezeigte Nachrichtenempfangshistorie gemäß den Nachrichtenempfangs-Standortinformationen, die zu früher empfangenen Nachrichten gehören, angeordnet wird.

7. Mobiles Endgerät nach Anspruch 5, wobei die Steuerung (180) ferner konfiguriert ist, um, wenn bestimmte Standortinformationen aus allen Standortinformationen, die in der Nachrichtenempfangshistorie auf der Anzeige (151) angezeigt werden, ausgewählt werden, eine Karte auf der Anzeige (151) anzuzeigen und die ausgewählten Standortinformationen auf der Karte graphisch dazustellen.

## Revendications

1. Terminal mobile (100) comprenant :
une unité de stockage (160) ;
une unité de communication (110) configurée pour recevoir ou transférer un message ;
une unité d'informations de localisation (115) configurée pour obtenir des informations de localisation indiquant un emplacement du terminal mobile ; et
un dispositif de commande (180) ;
**caractérisé en ce que** le dispositif de commande (180) est configuré pour stocker les informations de localisation obtenues en association avec le message dans l'unité de stockage si le message satisfait un critère prédéterminé,
dans lequel le critère prédéterminé comprend un mot-clé prédéfini qui est inclus dans le message reçu, un émetteur du message reçu qui est enregistré dans un répertoire téléphonique ou un numéro de téléphone particulier du message reçu contenant un numéro particulier.

2. Terminal mobile selon la revendication 1, dans lequel l'unité d'informations de localisation (115) est configurée pour obtenir les informations de localisation en utilisant un de ce qui suit :
un système satellite comprenant au moins un parmi GPS, GALILEO, GLONASS, COMPASS et QZSS ;
une communication avec au moins une station de base comprise dans un système de communication sans fil ; ou
une communication avec au moins un point d'accès compris dans un système LAN sans fil.

3. Terminal mobile selon la revendication 1, dans lequel, s'il existe une approbation de l'utilisateur, le dispositif de commande est configuré pour faire correspondre le message reçu avec les informations de localisation indiquant l'emplacement où le message est reçu, et pour stocker le message et les informations de localisation mis en correspondance dans l'unité de stockage (160).

4. Terminal mobile selon la revendication 1, comprenant en outre :
un dispositif d'affichage (151),
dans lequel, si un écran de réponse pour écrire une réponse au message reçu est affiché sur le dispositif d'affichage (151), le dispositif de commande (180) est configuré pour afficher en plus les informations de localisation obtenues associées au message reçu sur l'écran de réponse.

5. Terminal mobile selon la revendication 1, comprenant en outre :
un dispositif d'affichage (151),
dans lequel, si un écran pour afficher un historique de réception de messages du terminal mobile est affiché sur le dispositif d'affichage (151), le dispositif de commande (180) est configuré pour afficher en plus le message reçu et les informations de localisation associées sur l'écran, et n'importe quel autre message reçu et les informations de localisation de réception de message associées à celui-ci sur l'écran.

6. Terminal mobile selon la revendication 5, dans lequel l'historique de réception de messages affiché est agencé en fonction d'informations de localisation de réception de message associées à des messages précédemment reçus.

7. Terminal mobile selon la revendication 5, dans lequel, quand des informations de localisation particulières sont sélectionnées parmi toutes les informations de localisation affichées dans l'historique de réception de messages affiché sur le dispositif d'affichage (151), le dispositif de commande (180) est configuré en outre pour afficher une carte sur le dispositif d'affichage (151) et pour tracer les informations de localisation sélectionnées sur la carte.
